# FASCICULE DE BREVET EUROPEEN

(11) **EP 0 808 742 B1**
(45) Date de publication et mention de la délivrance du brevet: **13.10.1999**
(21) Numéro de dépôt: 97401096.9
(22) Date de dépôt: 16.05.1997
(51) Int. Cl.: B60N 2/22

(54) **Articulation réglable pour dossier de siège**
Verstellbares Drehgelenk für Sitzrückenlehne
Adjustable hinge for seat backrests

(30) Priorité: 21.05.1996 FR 9606279
(43) Date de publication de la demande: 26.11.1997
(73) Titulaire: BERTRAND FAURE EQUIPEMENTS S.A., 92100 Boulogne (FR)
(72) Inventeur: Rohee, René, 61100 La Chapelle-Biche (FR)
(74) Mandataire: Picard, Jean-Claude Georges

(56) Documents cités:
- EP-A- 0 502 774
- FR-A- 2 740 406
- US-A- 4 082 352
- US-A- 4 384 743

## Description

La présente invention concerne une articulation pour siège de véhicule, permettant de régler l'inclinaison du dossier du siège par rapport à son assise autour d'un axe horizontal, comportant un premier flasque et un deuxième flasque, destinés à être solidarisés respectivement avec l'assise du siège et avec le dossier du siège et montés pivotants l'un par rapport à l'autre autour de l'axe précité de façon à former un boîtier fermé, le deuxième flasque étant solidaire d'une denture à faible pas de verrouillage, qui s'étend sur au moins un arc de cercle centré sur ledit axe et qui est orientée radialement vers l'intérieur, au moins un grain intérieur au boîtier et pourvu d'une denture extérieure propre à s'engrener dans la denture du deuxième flasque, ce grain étant guidé en coulissement selon une direction radiale, par un guide solidaire du premier flasque, entre une position de verrouillage où le grain coopère avec la denture du deuxième flasque en bloquant l'articulation, et une position de déverrouillage où il est dégagé de la denture du deuxième flasque, une came intérieure au boîtier montée rotative autour de l'axe horizontal précité pour commander les coulissements radiaux du grain, cette came étant sollicitée par des moyens élastiques vers une position angulaire de repos pour laquelle elle repousse le grain dans sa position de verrouillage, et un organe de commande accessible de la personne assise sur le siège pour déplacer la came de sa position de repos vers une position de travail où elle permet au grain de coulisser radialement vers sa position dégagée.

Une articulation de ce type est connue par exemple de EP-A-0 502 774, déposée le 2 mars 1992 au nom de la demanderesse, en particulier dans son application au réglage de l'inclinaison d'un dossier de siège avant de véhicule.

Une articulation de ce type est également décrite dans la demande de brevet FR-A-2 740 406 (enregistrement national français n° 95 12723) déposée le 27 octobre 1995 au nom de la demanderesse et ne constituant pas un état de la technique au sens de l'article 54(2) de la CBE étant donné la date de priorité de la présente demande.

Dans les articulations de ce type, ce que l'on a appelé plus haut le "pas de verrouillage" est relativement faible, de l'ordre de 3°, pour assurer à la denture du deuxième flasque une résistance mécanique suffisante.

Or, il peut être parfois préférable, par exemple pour le réglage de l'inclinaison d'un dossier de banquette arrière de véhicule, d'obtenir un pas de réglage d'inclinaison du dossier, appelé ci-dessous "pas de crantage", notablement plus important que le pas de verrouillage, lequel devra rester relativement faible. Dans ce cas le pas de crantage est un multiple du pas de verrouillage.

Le but de l'invention est de résoudre ce problème de la façon la plus simple et la moins onéreuse possible, et à cet effet une articulation du type général défini plus haut est caractérisée en ce que ledit deuxième flasque comporte une crénelure concentrique à ladite denture, orientée radialement vers l'intérieur et ayant un pas de crantage égal à un multiple dudit pas de verrouillage de la denture, et en ce qu'au moins l'un desdits grains comporte une dent propre à s'engrener dans ladite crénelure pour permettre à la denture extérieure dudit grain de s'engrener dans la denture dudit deuxième flasque.

Comme dans le cas de l'articulation décrite dans la demande de brevet français rappelée plus haut, la présente articulation pourra comporter plusieurs grains, par exemple trois à écartements angulaires de 120°, et chacun de ces grains pourra porter une dent propre à coopérer avec la crénelure du deuxième flasque.

Le fonctionnement d'une articulation conforme à l'invention, ainsi que des dispositions connexes, vont maintenant être expliqués à titre d'exemples nullement limitatifs, avec référence aux figures du dessin ci-annexé dans lequel :
- la figure 1 est une vue latérale d'une articulation de siège d'automobile conforme à l'invention, avec portion coupée transversalement selon la ligne I-I de la figure 2, laquelle est une vue en coupe transversale selon la ligne II-II de la figure 1, l'articulation étant dans une position déverrouillée permettant un réglage de l'articulation du dossier ; et
- la figure 3 est une vue analogue à celle de la figure 1, pour une position verrouillée de l'articulation.

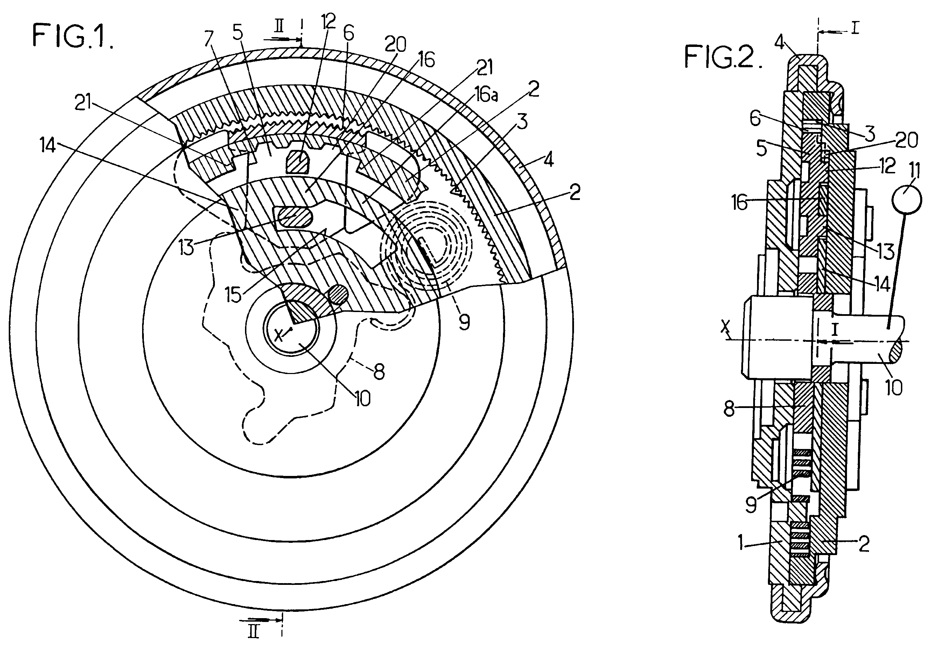

La partie connue de cette articulation comporte les éléments suivants :
- un premier flasque 1 dit fixe, qui est solidarisable avec l'armature de l'assise du siège,
- un second flasque 2 dit mobile, qui est solidarisable avec l'armature du dossier du siège et qui pivote autour de l'axe de rotation horizontal X de ce dossier, les flasques fixe et mobile formant ensemble un boîtier rond, et le flasque mobile comportant une denture circulaire 3 orientée radialement vers l'intérieur et disposée à l'intérieur du boîtier,
- une couronne de tôle 4 qui est sertie sur le pourtour du flasque fixe 1 et qui recouvre partiellement le flasque mobile 2 pour fermer le boîtier et maintenir les pourtours des deux flasques l'un contre l'autre,
- trois grains métalliques 5 pourvus chacun d'une denture extérieure 6 propre à coopérer avec la denture intérieure 3 du flasque mobile, ces trois grains étant guidés en coulissement radial dans des rainures de guidage 7 ménagées dans le flasque fixe, les directions de coulissement des trois grains étant décalées mutuellement de 120 degrés autour de l'axe X,
- une came 8, rotative autour de l'axe X et agissant sur les trois grains 5, cette came étant déplaçable angulairement entre, d'une part, une position de repos où elle repousse les grains vers une position de verrouillage pour laquelle les dentures extérieures 5 des grains coopèrent avec la denture intérieure 3 du flasque mobile en bloquant ainsi ledit flasque mobile, et d'autre part, une position de travail ou de déverrouillage pour laquelle ladite came permet aux grains 5 de reculer vers une position effacée pour laquelle leurs dentures extérieures sont dégagées de la denture intérieure du flasque mobile,
- trois ressorts 9, ici constitués par des lames enroulées en spirale, qui sollicitent angulairement la came 8 vers sa position angulaire de repos correspondant au verrouillage de l'articulation (ressorts dont un seul a été représenté sur la figure 1, pour simplifier),
- et un arbre 10 d'axe X solidaire de la came 8 et lié à un organe de commande tel qu'une poignée accessible de la personne assise sur le siège et représentée très schématiquement en 11 sur la figure 2.

De plus, on prévoit des dispositions permettant de maintenir les grains 5 en position de déverrouillage lorsque la came centrale 8 est dans une position autre que la position assurant leur verrouillage. On pourrait utiliser ici tout moyen approprié, par exemple des ressorts sollicitant en permanence les grains radialement vers l'intérieur, mais comme déjà expliqué dans la précédente demande, cela peut présenter certains inconvénients. Il est préférable d'utiliser des moyens de déverrouillage positifs, quoique ceux-ci ne soient pas indispensables dans le cadre de la présente invention. On pourra à cet effet prévoir, comme dans le cas de la précédente demande FR-A-2 740 406, mais ici facultativement, que l'articulation comporte en outre :
- sur chaque grain 5 un pion 13 faisant saillie sur ce grain selon la direction de l'axe X, et
- une plaquette mince 14 évidée par des lumières 15 traversées chacune par l'un des pions 13, cette plaquette étant solidaire de la came 8.

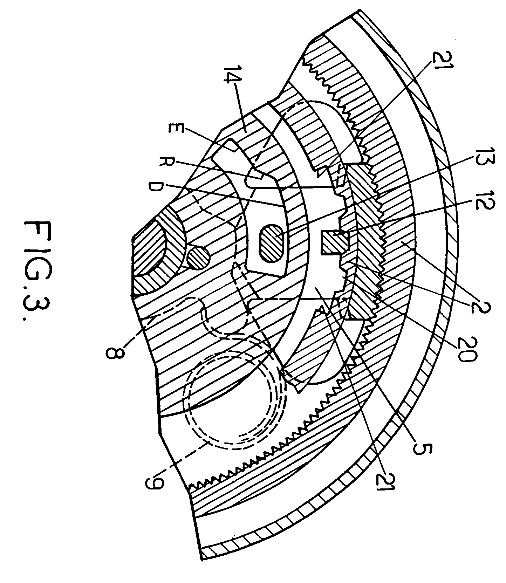

Chaque lumière 15 est allongée circonférentiellement autour de l'axe X et son bord le plus éloigné de cet axe présente un ressaut en ce sens qu'il comprend deux arcs de cercle D et E de diamètres différents raccordés entre eux par une rampe oblique R (voir figure 3).

Les diamètres des arcs D et E sont déterminés de façon telle :
- que, lorsque l'arc D de plus grand diamètre se trouve radialement en regard du pion 13 correspondant, celui-ci est libre de décrire la totalité de sa course radiale (voir figure 3),
- et qu'au contraire, lorsque l'arc E de plus petit diamètre se trouve en regard du pion, cet arc est appliqué radialement contre ce pion et le maintient en sa position la plus proche de l'axe correspondant au déverrouillage de l'articulation (voir figure 1).

Grâce à l'obliquité de la rampe R, une simple rotation de la plaquette 14 permet, par glissement du pion 12 contre cette rampe, de déplacer positivement ce dernier vers sa position dégagée de déverrouillage.

Bien entendu, pour que le débattement radial total de chaque grain soit possible, il convient que la plaquette ajourée 14 comprenne, au-dessus du pion 13 de chaque grain, un pontet 16 présentant une portion 16a suffisamment étroite.

Il est à noter que la plaquette ajourée est logée à l'intérieur du boîtier fermé délimité par les flasques 1 et 2, en compagnie de l'ensemble des éléments suivants : denture interne 3 du flasque mobile 2, grains 5 et leurs dentures 6, guides 7, came 8, ressorts 9, et que toutes ces pièces y sont automatiquement juxtaposées sans jeu, à glissement doux, sous un encombrement minimum, par suite du simple sertissage de la couronne de tôle 4 sur des portées annulaires périphériques juxtaposées des deux flasques 1 et 2.

Pour ce qui concerne maintenant plus précisément les dispositions distinctives de la présente invention, on prévoit sur le deuxième flasque 2 une crénelure 20 concentrique à la denture 3 et décalée par rapport à celle-ci à la fois radialement (vers l'axe), et axialement. Le pas de cette crénelure 20 est un multiple de celui de la denture 3. De préférence et comme bien visible sur les figures 1 et 3, cette crénelure 20 est divisée en trois arcs crénelés encadrant chaque grain 5 et délimités de chaque côté, avec un espacement angulaire approprié, par deux épaulements radiaux de butée 21. Chaque grain 5 comporte quant à lui une dent 12 propre à s'engrener dans l'arc crénelé 20 correspondant pour permettre à sa denture extérieure 6 de s'engrener dans la denture 3 du deuxième flasque 2, ceci comme visible sur la figure 3. L'inclinaison maximale du dossier de siège peut alors être limitée dans les deux sens, par mise en butée de l'un ou l'autre des épaulements 21 sur la dent 12.

Le fonctionnement de l'articulation est en définitive le suivant.

Au repos (figure 3), la came 8 se trouve en sa position angulaire pour laquelle les grains 5 sont en leur position radiale la plus éloignée de l'axe X, avec leurs dentures 6 en prise avec la denture 3 du flasque mobile 2 : le dossier est alors immobilisé. Il est à noter que cette immobilisation, grâce à la présente invention, ne peut se faire qu'en un nombre de positions d'inclinaison du dossier plus limité que ne l'autoriserait la seule coopération des dentures 6 et 3, puisque l'engrènement mutuel de ces dernières ne peut s'effectuer que sous condition d'engrènement mutuel des dents 12 dans les arcs crénelés correspondants 20, qui ont un pas notablement plus important que celui de la denture 3 ; c'est le but recherché.

Pour modifier la position angulaire de ce dossier, l'usager du siège actionne la poignée 11 à l'encontre des efforts de rappel des ressorts 9, ce qui entraîne les deux conséquences suivantes :
- les portions radialement saillantes de la came 8 qui étaient appliquées contre les grains 5 pour les mettre en prise avec la couronne dentée 6 se sont déplacées angulairement, rendant possibles les déplacements radiaux des grains vers l'axe X,
- ces déplacements sont imposés par coopération des lumières 15 de la plaquette 14 avec les pions 13.

En d'autres termes, on observe une commande "positive" du dégagement radial de chaque denture 6 de grain 5 hors de la denture 3 du flasque mobile 2, ainsi que de chaque dent 12 des grains hors de la crénelure 20 du même flasque.

Le dossier est alors libre en rotation autour de l'axe X par rapport à l'assise.

L'usager du siège peut alors modifier l'inclinaison angulaire de ce dossier, notamment en faisant pression plus ou moins avec son dos sur ce dossier à l'encontre d'un ressort de rappel approprié, et, lorsque la nouvelle position angulaire désirée est obtenue, en respectant le pas de crantage donné par la crénelure 20, il lui suffit de lâcher la poignée 11 : le rappel élastique des ressorts 9 a alors pour effet de ramener l'ensemble formé par la came 8 et par la plaquette 14 qui en est solidaire en sa position angulaire initiale correspondant au verrouillage, position pour laquelle, d'une part, les portions en saillie de la came 8 sont à nouveau appliquées radialement contre les grains 5 et pour laquelle, d'autre part, ce sont les portions radialement élargies des lumières 15 qui coiffent les pions 13, autorisant ainsi les retours des grains en leurs positions radiales les plus éloignées de l'axe.

Il est à noter que l'un des épaulements radiaux 21 de chaque arc crénelé 20 peut être suffisamment éloigné angulairement de la dent 12 du grain 5 correspondant pour permettre un rabattement du dossier de la banquette sur l'assise, ce qui peut être avantageux dans les véhicules de type break ou à cinq portes.

## Revendications

1. Articulation pour siège de véhicule, permettant de régler l'inclinaison du dossier du siège par rapport à son assise autour d'un axe horizontal (X), comportant un premier flasque (1) et un deuxième flasque (2), destinés à être solidarisés respectivement avec l'assise du siège et avec le dossier du siège et montés pivotants l'un par rapport à l'autre autour de l'axe (X) de façon à former un boîtier fermé, le deuxième flasque étant solidaire d'une denture (3) à faible pas de verrouillage, qui s'étend sur au moins un arc de cercle centré sur l'axe (X) et qui est orientée radialement vers l'intérieur, au moins un grain (5) intérieur au boîtier et pourvu d'une denture extérieure (6) propre à s'engrener dans la denture du deuxième flasque, ce grain étant guidé en coulissement selon une direction radiale, par un guide (7) solidaire du premier flasque, entre une position de verrouillage où le grain coopère avec la denture du deuxième flasque en bloquant l'articulation, et une position de déverrouillage où il est dégagé de la denture du deuxième flasque, une came (8) intérieure au boîtier montée rotative autour de l'axe (X) pour commander les coulissements radiaux du grain, cette came étant sollicitée par des moyens élastiques (9) vers une position angulaire de repos pour laquelle elle repousse le grain dans sa position de verrouillage, et un organe de commande (11) accessible de la personne assise sur le siège pour déplacer la came de sa position de repos vers une position de travail où elle permet au grain de coulisser radialement vers sa position dégagée, caractérisée en ce que ledit deuxième flasque (2) comporte une crénelure (20) concentrique à ladite denture (3), orientée radialement vers l'intérieur et ayant un pas de crantage égal à un multiple dudit pas de verrouillage de la denture (3), et en ce qu'au moins l'un desdits grains (5) comporte une dent (12) propre à s'engrener dans ladite crénelure (20) pour permettre à la denture extérieure (6) dudit grain (5) de s'engrener dans la denture (3) dudit deuxième flasque (2).

2. Articulation selon la revendication 1, caractérisée en ce que ladite crénelure (20) est divisée en plusieurs arcs crénelés encadrant chacun un grain (5), ces arcs étant délimités, de part et d'autre du grain correspondant, par des épaulements radiaux (21) propres à venir buter sur ladite dent (12) correspondante pour limiter dans les deux sens l'inclinaison du dossier.

## Claims

1. A hinge for a vehicle seat, the hinge enabling the inclination of the seat back to be adjusted relative to the seat proper about a horizontal axis (X), the hinge comprising: a first cheek plate (1) and a second cheek plate (2) designed to be secured respectively to the seat proper and to the seat back, and mounted to each other to form a closed housing and to pivot relative to each other about the axis (x), the second cheek plate being secured to a set of teeth (3) having a small locking pitch, which set of teeth extends over at least an arc of a circle centered on the axis (X) and being directed radially inwards; at least one slug (5) inside the housing and provided with outwardly-directed teeth (6) suitable for meshing with the teeth of the second cheek plate, said slug being guided by a guide (1) secured to the first cheek plate to slide in a radial direction between a locking position in which the slug co-operates with the teeth of the second cheek plate, thereby holding the hinge, and an unlocking position in which it is disengaged form the teeth of the second cheek plate; a cam (8) inside the housing and mounted to rotate about the axis (X) to control radial sliding of the slug, said cam being urged by resilient means (9) towards an angular rest position in which it urges the slug into its locking position; and a control member (11) accessible to a person sitting on the seat to displace the cam from its rest position to a working position in which it allows the slug to slide radially towards its disengaged position; the hinge being characterized in that: said second cheek plate (2) includes a set of notches (20) disposed concentrically with said set of teeth (3) directed radially inwards, and having a notch pitch equal to a multiple of said locking pitch of the teeth (3); and in that at least one of said slugs (5) includes a tooth (12) suitable for meshing in said set of notches (20) to enable the outwardly directed set of teeth (6) of said slug (5) to mesh in the inwardly directed set of teeth (3) of said second cheek plate (2).

2. A hinge according to claim 1, characterized in that said set of notches (20) is subdivided into a plurality of notched arcs each around a respective slug (5), said arcs being defined on either side of the corresponding slug by radial shoulders (21) suitable for coming into abutment against said corresponding tooth (12) to limit inclination of the seat back in both directions.

## Patentansprüche

1. Gelenk für einen Fahrzeugsitz zur Verstellung der Neigung der Rückenlehne gegenüber dem Sitzkissen um eine horizontale Achse (X), das folgendes aufweist:
- einen ersten Flansch (1) und einen zweiten Flansch (2), die mit dem Sitzkissen beziehungsweise mit der Rückenlehne des Sitzes fest verbunden und um die Achse (X) gegeneinander verschwenkbar derart angeordnet sind, daß sie ein geschlossenes Gehäuse bilden, wobei der zweite Flansch mit einer Zahnung (3) mit geringer Verriegelungsteilung fest verbunden ist, die sich auf mindestens einem auf der Achse (X) zentrierten Kreisbogen erstreckt und radial nach innen ausgerichtet ist,
- mindestens ein Paßstück (5) innerhalb des Gehäuses, das mit einer äußeren Zahnung (6) versehen ist, die in die Zahnung des zweiten Flansches eingreifen kann, wobei dieses Paßstück in radialer Richtung durch eine mit dem ersten Flansch verbundene Führung (7) zwischen einer Verriegelungsposition, in der das Paßstück mit der Zahnung des zweiten Flansches zusammenwirkt und das Gelenk blockiert, und einer Entriegelungsposition, in der es von der Zahnung des zweiten Flansches gelöst ist, verschiebbar ist,
- eine um die Achse (X) drehbar befestigte Nocke (8) innerhalb des Gehäuses zur Steuerung der Radialverschiebungen des Paßstücks, wobei die Nocke durch elastische Mittel (9) in eine Winkel-Ruhelage gebracht wird, in der sie das Paßstück in die Verriegelungsposition zurückdrückt, und
- ein Steuerungsorgan (11) in Reichweite der auf dem Sitz sitzenden Person zum Verschieben der Nocke aus der Ruhelage in eine Arbeitslage, in der das Paßstück radial in die gelöste Position gleiten kann,
dadurch gekennzeichnet, daß der zweite Flansch (2) einen mit der Zahnung (3) konzentrischen Zahnkranz (20) aufweist, der radial nach innen ausgerichtet sind und dessen Zahnungsteilung ein Vielfaches der Verriegelungsteilung der Zahnung (3) beträgt, und daß mindestens eines der Paßstücke (5) einen Zahn (12) aufweist, der in den Zahnkranz (20) eingreifen kann und es zuläßt, daß die äußere Zahnung (6) des Paßstücks (5) in die Zahnung (3) des zweiten Flansches (2) eingreift.

2. Gelenk nach Anspruch 1, dadurch gekennzeichnet, daß der Zahnkranz (20) mehrere gezahnte Bögen umfaßt, die jeweils ein Paßstück (5) eingrenzen, wobei diese Bögen zu beiden Seiten des jeweiligen Paßstücks von radialen Absätzen (21) begrenzt werden, die auf dem jeweiligen Zahn (12) zum Anschlag kommen können und die Neigung der Rückenlehne in beiden Richtungen begrenzen.
